# EUROPÄISCHE PATENTSCHRIFT

(11) **EP 3 212 490 B1**
(45) Veröffentlichungstag und Bekanntmachung des Hinweises auf die Patenterteilung: **04.12.2019**
(21) Anmeldenummer: 15777932.3
(22) Anmeldetag: 08.10.2015
(51) Int. Cl.: B62D 65/02, B23P 19/00, B25J 9/00, G05B 19/418, B23Q 17/00, B21D 43/00, B23P 19/10, B25J 9/16, B23Q 7/04, B23Q 17/24, B29C 51/12

(54) **SYSTEM UND VERFAHREN ZUM LAGEGENAUEN PLATZIEREN EINES ZU BEARBEITENDEN OBJEKTS AN EINER FERTIGUNGSVORRICHTUNG**
SYSTEM AND METHOD FOR PLACING AN OBJECT, WHICH IS TO BE PROCESSED, ON A PRODUCTION APPARATUS IN A PRECISE POSITION
SYSTÈME ET PROCÉDÉ DE PLACEMENT PRÉCIS D'UN OBJET À TRAITER AU NIVEAU D'UN DISPOSITIF DE FINITION

(30) Priorität: 28.10.2014 DE 102014221877
(43) Veröffentlichungstag der Anmeldung: 06.09.2017
(73) Patentinhaber: Bayerische Motoren Werke Aktiengesellschaft, 80809 München (DE)
(72) Erfinder: HODDE, Jan, 80796 München (DE); STANGLMAIER, Stefan Josef, 84048 Mainburg (DE); ZWINDERMAN, Remco, 85356 Freising (DE)
(86) Internationale Anmeldenummer: PCT/EP2015/073231
(87) Internationale Veröffentlichungsnummer: WO 2016/066393

(56) Entgegenhaltungen:
- EP-A1- 0 104 270
- EP-B1- 2 190 604
- DE-A1- 10 242 710
- DE-A1-102008 018 848
- US-B1- 6 167 607

## Beschreibung

Die vorliegende Erfindung betrifft ein System zum lagegenauen Platzieren eines zu bearbeitenden Objekts an einer Fertigungsvorrichtung mittels eines Lagebestimmungssystems und einer Positioniervorrichtung. Des Weiteren betrifft die Erfindung ein Verfahren zum lagegenauen Platzieren eines zu bearbeitenden Objekts an einer Fertigungsvorrichtung, das auf einem derartigen System ausführbar ist.

In automatisierten Fertigungs- und Montagesystemen werden zu bearbeitende Objekte, die an einer ersten Stelle angeordnet sind, von Positioniervorrichtungen aufgenommen und an einer zweiten Stelle wieder abgesetzt. Hierfür weisen Positioniervorrichtungen eine Aufnahmevorrichtung zur Aufnahme sowie Abgabe des zu bearbeitenden Objekts auf. Beim Absetzen des zu bearbeitenden Objekts an der zweiten Stelle ist eine möglichst exakte Positionierung des zu bearbeitenden Objekts erforderlich, um eine möglichst hohe Prozesssicherheit bzw. Zuverlässigkeit eines anschließenden Fertigungs- bzw. Montageprozesses zu gewährleisten. Eine fehlerhafte Positionierung eines zu bearbeitenden Objekts kann bei automatisierten Fertigungs- und Montagesystemen zu fehlerhaften Produkten sowie in Extremfällen zum Stillstand des Fertigungs- bzw. Montagesystems führen.

Insbesondere in der Automobilindustrie kommen derartige automatisierte Fertigungs- und Montagesysteme zum Einsatz. Bei der Herstellung faserverstärkter Bauteile, wie z.B. Schalenbauteile, werden zu bearbeitenden Objekte mit Verstärkungsfasern zur Erhöhung der Festigkeit sowie Steifigkeit verstärkt. Derartige Objekte sind oftmals als Kunststoffbauteile ausgebildet und werden daher als faserverstärkte Kunststoffe bezeichnet. Faserverstärkte Kunststoffe weisen Verstärkungsfasern auf, die in eine Kunststoffmatrix eingebettet sind. Da eine bestimmungsgemäße mechanische Beanspruchung oftmals inhomogen über ein Bauteil verteilt ist, weist das Bauteil zur Reduzierung des Gesamtgewichts eine Faserverstärkung auf, die in Abhängigkeit dieser mechanischen Beanspruchung ausgebildet ist. Derartige faserverstärkte Bauteile weisen somit Faserverstärkungen auf, die über das jeweilige Bauteil unterschiedlich ausgebildet sein können, so dass einige Stellen des Bauteils z.B. eine stärkere Faserverstärkung oder eine Faserverstärkung mit einer anderen Orientierung der Verstärkungsfasern als andere Stellen aufweisen.

Zur Herstellung von Bauteilen mit lokal ausgebildeten Faserverstärkungen werden Presswerkzeuge eingesetzt, die Taschen zur Aufnahme der Verstärkungsfasern aufweisen. Da Faserverstärkte Kunststoffe eine besonders hohe Belastbarkeit aufweisen, wenn die Verstärkungsfasern in Richtung des Kraftflusses ausgerichtet sind, ist daher neben einer genauen Positionierung der Verstärkungsfasern an der zu verstärkenden Stelle des Bauteils auch eine genaue Ausrichtung der Verstärkungsfasern zum Bauteil von großer Bedeutung, um eine möglichst effiziente Verstärkung eines Bauteils zu erzielen. Eine ungenaue bzw. falsche Positionierung der Verstärkungsfasern in dem Presswerkzeug kann zu einer lokalen Überpressung des Bauteils führen und das Bauteil somit beschädigen. Eine ungenaue bzw. falsche Orientierung der Verstärkungsfasern in dem Presswerkzeug kann zur Folge haben, dass die Verstärkungsfasern nicht optimal zum Kraftfluss ausgerichtet sind und somit keine ausreichende Verstärkungswirkung des Bauteils entfalten, so dass das Bauteil ggf. nicht bestimmungsgemäß einsetzbar ist. Aus diesem Grund stellen derartige Fertigungs- und Montagesysteme eine besondere Anforderung an die Zuverlässigkeit eines Systems zum lagegenauen Platzieren eines Bauteils, wie z.B. eines faserverstärkten Kunststoffes, an einer Fertigungsvorrichtung.

Es ist ein System zum Platzieren eines zu bearbeitenden Objekts an einer Fertigungsvorrichtung bekannt, bei dem das zu bearbeitende Objekt auf einer Aufnahmevorrichtung einer Positioniervorrichtung anordenbar ist. Das System weist ein optisches Erkennungssystem zur Ermittlung einer relativen Position des zu bearbeitenden Objekts zur Positioniervorrichtung auf. Des Weiteren weist das System Lagedaten einer idealen relativen Lage der Fertigungsvorrichtung zum System auf. Ein derartiges System hat den Nachteil, dass eine falsche Lage der Fertigungsvorrichtung von dem System nicht erkennbar ist und zu fehlerhaften Produkten führen kann. Daher ist die Fertigungsvorrichtung unter Beachtung sehr geringer Toleranzen relativ zum System anzuordnen. Dieser Vorgang ist sehr zeitaufwändig und führt zu einem übermäßig langen Stillstand des Fertigungssystems sowie zu einem hieraus resultierenden Anstieg der Herstellungskosten. Die DE 102008018848 offenbart ein Verfahren sowie eine Vorrichtung zur automatisierten Bauteilmontage. Diese Vorrichtung weist eine Kameraeinheit (28, 29) zur automatisierten Erfassung der Geometrie und/oder der Lage eines Fahrzeugrads (10) sowie zur automatischen Erfassung der Geometrie und/oder der Lage eines Fahrzeugs (12) auf.

Es ist daher Aufgabe der vorliegenden Erfindung, die voranstehend beschriebenen Nachteile bei einem System zum lagegenauen Platzieren eines zu bearbeitenden Objekts an einer Fertigungsvorrichtung zumindest teilweise zu beheben. Insbesondere ist es Aufgabe der vorliegenden Erfindung ein System zum lagegenauen Platzieren eines zu bearbeitenden Objekts an einer Fertigungsvorrichtung zu schaffen, das ein lagegetreues Platzieren eines zu bearbeitenden Objekts an einer Fertigungsvorrichtung ohne aufwändiges Ausrichten der Fertigungsvorrichtung ermöglicht. Des Weiteren ist es die Aufgabe der vorliegenden Erfindung, ein Verfahren zum lagegenauen Platzieren eines zu bearbeitenden Objekts an einer Fertigungsvorrichtung bereitzustellen, das obige Nachteile zumindest teilweise nicht aufweist.

Voranstehende Aufgabe wird gelöst durch ein System mit den Merkmalen des Anspruchs 1 sowie durch ein Verfahren zum lagegenauen Platzieren eines zu bearbeitenden Objekts an einer Fertigungsvorrichtung mit den Merkmalen gemäß Anspruch 9. Weitere Merkmale und Details der Erfindung ergeben sich aus den Unteransprüchen. Dabei gelten Merkmale und Details, die im Zusammenhang mit der Vorrichtung beschrieben sind, selbstverständlich auch im Zusammenhang mit dem erfindungsgemäßen Verfahren und jeweils umgekehrt.

Gemäß dem ersten Aspekt der Erfindung wird die Aufgabe gelöst durch ein System zum lagegenauen Platzieren eines zu bearbeitenden Objekts an einer Fertigungsvorrichtung, aufweisend mindestens ein Lagebestimmungssystem zur Bestimmung einer relativen Lage eines zu bearbeitenden Objekts zu einer Fertigungsvorrichtung und eine Positioniervorrichtung zum Positionieren des zu bearbeitenden Objekts an der Fertigungsvorrichtung. Die Positioniervorrichtung weist eine Aufnahmevorrichtung zur Aufnahme sowie Abgabe des zu bearbeitenden Objekts und einen bewegbaren Arm zum Bewegen des zu bearbeitenden Objekts aus einer ersten Lage in eine zweite Lage auf. Das Lagebestimmungssystem weist mindestens eine Lageerfassungseinrichtung auf, die zur Erfassung einer relativen Lage der Aufnahmevorrichtung zur Lageerfassungseinrichtung ausgebildet ist. Des Weiteren ist die Lageerfassungseinrichtung ausgebildet, eine relative Lage des zu bearbeitenden Objekts zur Lageerfassungseinrichtung sowie eine relative Lage der Fertigungsvorrichtung zur Lageerfassungseinrichtung zu erfassen.

Unter einer Lage eines zu bearbeitenden Objekts werden im Sinne der Erfindung eine Position und eine Ausrichtung des zu bearbeitenden Objekts verstanden. Durch die Lage sind somit sämtliche Freiheitsgrade eines Körpers in einem dreidimensionalen Raum bestimmt.

Die zu bearbeitenden Objekte sind vorzugsweise lokal faserverstärkte Halbzeuge, die auch als Tailored Blank bezeichnet werden. Die zu bearbeitenden Objekte sind vorzugsweise im Wesentlichen aus einem Kunststoff gebildet und weisen Verstärkungsfasern auf.

Eine Fertigungsvorrichtung ist im Sinne der Erfindung ein Teil einer Fertigungseinrichtung, an dem ein zu bearbeitendes Objekt zur Bearbeitung anordenbar ist. Eine Fertigungsvorrichtung kann beispielsweise als Spannvorrichtung, wie z.B. ein Spanntisch, oder Teil eines Umformwerkzeugs, das z.B. lokale Erhebungen und/oder Vertiefungen aufweist, ausgebildet sein. Im Sinne der Erfindung kann unter einer Anordnung an der Fertigungsvorrichtung auch ein Anordnen in bzw. auf der Fertigungsvorrichtung verstanden werden und ist daher nicht als Einschränkung im Sinne von "neben der Fertigungsvorrichtung" zur verstehen.

Ein Lagebestimmungssystem weist mindestens eine Lageerfassungseinrichtung auf, mittels der die Lage eines Objekts innerhalb eines Operationsgebiets des Lagebestimmungssystems relativ zur Lageerfassungseinrichtung erfassbar ist. Da eine Lage der Lageerfassungseinrichtung innerhalb des Operationsgebiets des Lagebestimmungssystems bekannt ist, ist somit die Lage des Objekts relativ zu jedem Bezugspunkt innerhalb des Operationsgebiets und somit auch relativ zur Fertigungsvorrichtung bestimmbar.

Eine Positioniervorrichtung ist eine Vorrichtung, mittels der ein zu bearbeitendes Objekt an einem ersten Ort aufnehmbar und an einem zweiten Ort wieder ablegbar ist.

Dabei ist die Positioniervorrichtung ausgebildet, das zu bearbeitende Objekt lagegetreu, also an einer vorgegebenen Position sowie mit einer vorgegebenen Ausrichtung bzw. Orientierung, abzulegen. Die Positioniervorrichtung ist mit dem Lageerfassungssystem gekoppelt, so dass gewonnene Lageinformationen von dem zu bearbeitenden Objekt und der Fertigungsvorrichtung zum lagegenauen Ablegen des zu bearbeitenden Objekts an der Fertigungsvorrichtung von der Positioniervorrichtung verwendbar sind.

Ein derartiges System hat den Vorteil, dass durch Erfassen der Lage der Fertigungsvorrichtung durch die Lageerfassungseinrichtung ein exaktes Ausrichten der Fertigungsvorrichtung zum Lagebestimmungssystem bzw. zur Positioniervorrichtung nicht mehr erforderlich ist, da eine etwaige Lageabweichung der Fertigungsvorrichtung von einer Solllage von dem Lagebestimmungssystem detektierbar und somit durch eine entsprechende Ansteuerung der Positioniervorrichtung ausgleichbar ist. Auf diese Weise können Stillstandszeiten z.B. bei einer Neueinrichtung oder Wartung der Fertigungseinrichtung erheblich reduziert und Fertigungskosten somit deutlich gesenkt werden. Des Weiteren ermöglicht das erfindungsgemäße System eine signifikante Steigerung der Prozesssicherheit, da sämtliche für die Produktion relevanten Lagen während der Produktion ermittelbar und somit live verfügbar sind. Abweichungen, wie beispielsweise ein Verdrehen der Halbzeuge, sind somit sofort erkennbar und ausgleichbar, ohne dafür die Produktion anhalten zu müssen.

Gemäß einer bevorzugten Weiterentwicklung der Erfindung weist das Lagebestimmungssystem mindestens eine erste Referenzmarkierung und mindestens eine zweite Referenzmarkierung auf, wobei die erste Referenzmarkierung an der Aufnahmevorrichtung anordenbar und die zweite Referenzmarkierung an der Fertigungsvorrichtung anordenbar sind. Das Lagebestimmungssystem ist dabei ausgebildet, eine relative Lage der ersten Referenzmarkierung und der zweiten Referenzmarkierung zur Lageerfassungseinrichtung zu bestimmen. Hierbei ist es erforderlich, eine Lage der ersten Referenzmarkierung zur Aufnahmevorrichtung sowie eine Lage der zweiten Referenzmarkierung zur Fertigungsvorrichtung zu bestimmen, damit über ermittelte Lagen der Referenzmarkierungen Rückschlüsse auf die Lagen von Aufnahmevorrichtung sowie Fertigungsvorrichtung ziehbar sind. Derartige Referenzmarkierungen haben den Vorteil, dass eine Lage der Aufnahmevorrichtung sowie der Fertigungsvorrichtung leicht von der Lagebestimmungseinrichtung erfassbar ist. Hierdurch wird die Zuverlässigkeit des Systems weiter erhöht.

Vorzugsweise ist das Lagebestimmungssystem weiter ausgebildet, eine relative Lage des zu bearbeitenden Objekts zur ersten Referenzmarkierung zu bestimmen. Hierbei spielt es im Sinne der Erfindung keine Rolle, ob dies durch Ermittlung einer Lage des zu bearbeitenden Objekts relativ zur ersten Referenzmarkierung oder relativ zur Aufnahmevorrichtung erfolgt, da eine relative Lage der ersten Referenzmarkierung zur Aufnahmevorrichtung bereits bestimmt ist. Ein derartiges System hat den weiteren Vorteil, dass das zu bearbeitende Objekt nicht exakt auf der Aufnahmevorrichtung angeordnet bzw. ausgerichtet sein muss, da etwaige Lageabweichungen von einer Solllage von der Lageerfassungseinrichtung erfassbar und somit von der Positioniervorrichtung beim Ablegen des zu bearbeitenden Objekts ausgleichbar sind. Hierdurch werden die Prozesssicherheit weiter erhöht und Fertigungskosten reduziert.

In einer vorteilhaften Ausgestaltung der Erfindung weist die Lageerfassungseinrichtung eine optische Lageerfassungsvorrichtung auf. Optische Lageerfassungsvorrichtungen weisen z.B. eine Kamera auf, die zum Erfassen von Objekten, insbesondere Referenzmarkierungen, ausgebildet ist. Bevorzugte optische Lageerfassungsvorrichtungen sind ausgebildet, eine Kontur eines Objekts, das nicht als spezieller Referenzkörper ausgebildet ist, zu erfassen. Hieraus kann das Lagebestimmungssystem die Lage des Objekts bestimmen. Derartige Lageerfassungsvorrichtungen haben den Vorteil, dass sie relativ kostengünstig sind und bei freiem Blickfeld auf zumindest Teilbereiche eines Objekts eine zuverlässige Lagebestimmung des Objekts ermöglichen.

Vorzugsweise die erste Referenzmarkierung und/oder die zweite Referenzmarkierung mindestens einen kugelförmigen Referenzkörper aufweist. Weiter bevorzugt weist die Referenzmarkierung mindestens drei solche Referenzkörper auf. Des Weiteren ist es bevorzugt, wenn die Referenzmarkierung im Wesentlichen flächig ausgebildet ist, um das Risiko einer Beschädigung der Referenzkörper zu reduzieren. Derartige Referenzkörper haben den Vorteil, dass sie eine besonders präzise Ermittlung von Lagedaten durch die Lageerfassungseinrichtung ermöglichen und sehr kostengünstig herstellbar sind.

Es ist bevorzugt, dass die Positioniervorrichtung als Roboter ausgebildet ist. Derartige Roboter sind in automatisierte Fertigungs- und Montagesysteme gut integrierbar, weisen eine hohe Zuverlässigkeit auf und können zur Steigerung der Produktivität beitragen. Durch Bereitstellen der ermittelten Lagedaten einer Steuereinheit des Roboters sind Positionierfehler beim Ablegen des zu bearbeitenden Objekts an der Fertigungsvorrichtung vermeidbar. Dies hat den Vorteil, dass das System eine hohe Prozesssicherheit aufweist.

Weiter bevorzugt weist die Fertigungsvorrichtung mindestens eine Tasche und/oder Erhebung zur Aufnahme eines Teilbereichs des zu bearbeitenden Objekts auf. Taschen bzw. Erhebungen können im Sinne der Erfindung sowohl Kanten als auch Rundungen aufweisen. Bevorzugt weisen die Taschen bzw. Erhebungen mindestens einen Formschlussabschnitt auf, der eine Anordnung des zu bearbeitenden Objekts an der Fertigungsvorrichtung erleichtert. Dies hat den Vorteil, dass die Prozesssicherheit des Systems weiter verbessert wird. Des Weiteren haben Taschen den Vorteil, dass bei an Presswerkzeugen angeordneten zu bearbeitenden Objekten die in den Taschen angeordneten Teilbereiche beim Pressvorgang einer geringeren mechanischen Belastung ausgesetzt sind als wenn sie nicht in Taschen angeordnet wären. Somit ist verhinderbar, dass das zu bearbeitende Objekt an lokalen Bereichen beim Pressvorgang nicht übermäßig belastet wird. Dies hat den Vorteil, dass die Prozesssicherheit weiter erhöht wird.

Besonders bevorzugt ist die Fertigungsvorrichtung als Presswerkzeug ausgebildet. Derartige Werkzeuge sind geeignet, zu bearbeitende Objekte, wie z.B. Tailored Blanks, die an mindestens einer Stelle eine Faserverstärkung aufweisen, zu einem Bauteil umzuformen und dabei eine Verbindung zwischen einem Grundkörper und den Verstärkungsfasern durch Druck zu verstärken. Derartige Fertigungsvorrichtungen sind für daher die Bearbeitung von Tailored Blanks in der Massenproduktion besonders geeignet.

Des Weiteren wird die Aufgabe erfindungsgemäß durch ein Verfahren zum lagegenauen Platzieren von zu bearbeitenden Objekten an einer Fertigungsvorrichtung gelöst. Das Verfahren aufweisend die Schritte:
- Anordnen eines zu bearbeitenden Objekts an einer Aufnahmevorrichtung einer Positioniervorrichtung;
- Ermitteln einer relativen Lage des zu bearbeitenden Objekts zu der Aufnahmevorrichtung;
- Ermitteln einer relativen Lage der Aufnahmevorrichtung zu einer Lageerfassungseinrichtung mittels der Lageerfassungseinrichtung;
- Ermitteln einer relativen Lage einer Fertigungsvorrichtung zur Lageerfassungseinrichtung mittels der Lageerfassungseinrichtung;
- Bestimmen einer relativen Lage des zu bearbeitenden Objekts zur Fertigungsvorrichtung; und
- lagegenaues Ablegen des zu bearbeitenden Objekts an der Fertigungsvorrichtung mittels der Positioniervorrichtung.

Dieses Verfahren hat den Vorteil, dass ein aufwändiges Ausrichten der Fertigungsvorrichtung relativ zur Positioniervorrichtung nicht mehr erforderlich ist, da eine etwaige Lageabweichung der Fertigungsvorrichtung von dem Lageerfassungssystem ermittelbar und somit beim Ablegen des zu bearbeitenden Objekts an der Fertigungsvorrichtung von der Positioniervorrichtung ausgleichbar ist. Somit weist das erfindungsgemäße Verfahren gegenüber bekannten Verfahren eine erhöhte Prozesssicherheit sowie Wirtschaftlichkeit auf.

Vorzugsweise erfolgt das Ermitteln der relativen Lage des zu bearbeitenden Objekts zu der Aufnahmevorrichtung durch die Lageerfassungseinrichtung. Dies hat den Vorteil, dass ein aufwändiges Ausrichten des zu bearbeitenden Objekts auf der Aufnahmevorrichtung nicht mehr erforderlich ist, da eine etwaige Lageabweichung des zu bearbeitenden Objekts von dem Lageerfassungssystem ermittelbar und somit beim Ablegen des zu bearbeitenden Objekts an der Fertigungsvorrichtung von der Positioniervorrichtung ausgleichbar ist. Auf diese Weise werden Prozesssicherheit und Wirtschaftlichkeit des Verfahrens weiter verbessert.

Im Folgenden wird ein erfindungsgemäßes System zum lagegenauen Platzieren eines zu bearbeitenden Objekts an einer Fertigungsvorrichtung anhand von Zeichnungen näher erläutert. Es zeigen jeweils schematisch:
- Figur 1: in einer Seitenansicht ein erfindungsgemäßes System, und
- Figur 2: ein Ablaufdiagramm eines erfindungsgemäßen Verfahrens.

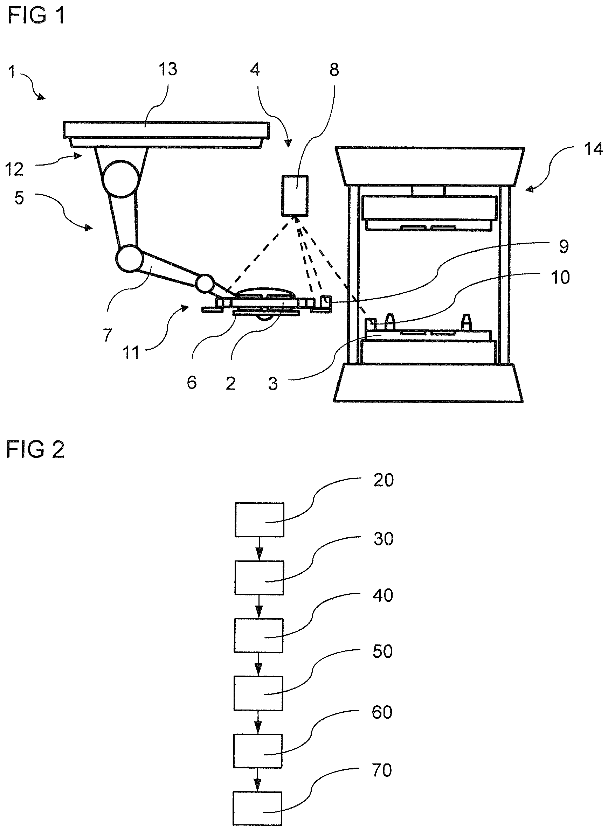

In Figur 1 ist ein erfindungsgemäßes System 1 zum lagegenauen Platzieren eines zu bearbeitenden Objekts 2 an einer Fertigungsvorrichtung 3 in einer Seitenansicht schematisch dargestellt. Das System 1 weist eine Positioniervorrichtung 5 auf, die als Roboter mit einem Arm 7 und einer an einem unteren Ende 11 des Arms 7 angeordneten Aufnahmevorrichtung 6 ausgebildet ist. Die Aufnahmevorrichtung 6 ist in diesem Ausführungsbeispiel als geschlitzter Flachgreifer ausgebildet, der zum Greifen des zu bearbeitenden Objekts 2 ausgebildet ist. Das zu bearbeitende Objekt 2 ist ein als Tailored Blank ausgebildetes Halbzeug.

Ein oberes Ende 12 der Positioniervorrichtung 5 ist an einer horizontal verlaufenden Schiene 13 angeordnet, so dass die Positioniervorrichtung 5 entlang der Schiene 13 horizontal verfahrbar ist. Die Schiene 13 ist z.B. an einer Decke einer Fertigungshalle oder an einem Gerüst angeordnet. In alternativen Ausführungsformen kann die Schiene 13 beispielsweise auch auf dem Boden, an einer Wand oder an einem Fahrzeug angeordnet sein.

Des Weiteren Weist das System 1 zum lagegenauen Platzieren eines zu bearbeitenden Objekts 2 an einer Fertigungsvorrichtung 3 ein Lagebestimmungssystem 4 mit einer Lageerfassungseinrichtung 8, einem ersten Referenzsensor 9 sowie einem zweiten Referenzsensor 10 auf. Der erste Referenzsensor 9 ist an der Aufnahmevorrichtung 6 und der zweite Referenzsensor 10 an der Fertigungsvorrichtung 3 angeordnet. Die Lageerfassungseinrichtung 8 weist eine optische Lageerfassungseinrichtung 8 auf und ist ausgebildet, eine relative Lage des ersten Referenzsensors 9, des zweiten Referenzsensors 10 sowie des zu bearbeitenden Objekts 2 relativ zur Lageerfassungseinrichtung 8 zu erfassen. Von der Lageerfassungseinrichtung 8 detektierte Bereiche sind in dieser Abbildung als gestrichelte Linien symbolisiert. Es versteht sich von selbst, dass die Lageerfassungseinrichtung 8 ausgebildet ist, eine Vielzahl weiterer Bereiche zu detektieren.

Die Fertigungsvorrichtung 3 ist in diesem Ausführungsbeispiel als Unterteil eines Presswerkzeugs einer Presse 14 ausgebildet.

Figur 2 zeigt schematisch in einem Ablaufdiagramm die einzelnen Schritte des erfindungsgemäßen Verfahrens. Im ersten Verfahrensschritt 20 wird ein zu bearbeitendes Objekt 2 an einer Aufnahmevorrichtung 6 einer Positioniervorrichtung 5 angeordnet. Im zweiten Verfahrensschritt 30 wird eine relative Lage des zu bearbeitenden Objekts 2 zu der Aufnahmevorrichtung 6 ermittelt. Dies geschieht beispielsweise über eine Zentriereinrichtung, die an der Aufnahmevorrichtung 6 angeordnet ist. Im dritten Verfahrensschritt 40 wird eine relative Lage der Aufnahmevorrichtung 6 zu einer Lageerfassungseinrichtung 8 mittels der Lageerfassungseinrichtung 8 ermittelt. Dies geschieht z.B. durch Erfassen eines ersten Referenzkörpers 9, der an der Aufnahmevorrichtung 6 angeordnet ist, z.B. mit optischen Mitteln. Im vierten Verfahrensschritt 50 wird eine relative Lage einer Fertigungsvorrichtung 3 zur Lageerfassungseinrichtung 8 mittels der Lageerfassungseinrichtung 8 ermittelt. Dies geschieht z.B. durch Erfassen eines zweiten Referenzkörpers 10, der an der Fertigungsvorrichtung 3 angeordnet ist, z.B. mit optischen Mitteln. Im fünften Verfahrensschritt 60 wird eine relative Lage des zu bearbeitenden Objekts 2 zur Fertigungsvorrichtung 3 bestimmt. Dies erfolgt vorzugsweise durch eine Recheneinheit, die die ermittelten relativen Lagen miteinander vergleicht und hieraus die relative Lage des zu bearbeitenden Objekts 2 zur Fertigungsvorrichtung 3 berechnet. Im sechsten Verfahrensschritt 70 wird das zu bearbeitende Objekt 2 mittels der Positioniervorrichtung 5 lagegenau an der Fertigungsvorrichtung 3 abgelegt. Die hierfür erforderlichen Lagedaten des zu bearbeitenden Objekts 2 sowie der Fertigungsvorrichtung 3 werden von dem Lagebestimmungssystem 4 bereitgestellt.

Ein derartiges Verfahren hat den Vorteil, dass eine Fertigungsvorrichtung 3 innerhalb verhältnismäßig großer Toleranzen relativ zur Positioniervorrichtung 5 anordenbar ist, ohne eine Prozesssicherheit des Systems 1 hierdurch negativ zu beeinflussen. Hierdurch sind Fertigungskosten einsparbar und Positioniertoleranzen reduzierbar.

In einer Fortbildung des erfindungsgemäßen Verfahrens erfolgt das Ermitteln der relativen Lage des zu bearbeitenden Objekts 2 zu der Aufnahmevorrichtung 6 durch die Lageerfassungseinrichtung. Ein genaues Ausrichten des Objekts 2 zur Aufnahmevorrichtung 6 ist somit innerhalb verhältnismäßig großer Toleranzen möglich, da das System 1 zum Kompensieren solcher Toleranzen ausgebildet ist. Dies hat den Vorteil, dass die Prozesssicherheit weiter erhöht und Fertigungskosten weiter gesenkt werden.

### Bezugszeichenliste

- 1: System
- 2: zu bearbeitendes Objekt
- 3: Fertigungsvorrichtung
- 4: Lagebestimmungssystem
- 5: Positioniervorrichtung
- 6: Aufnahmevorrichtung
- 7: Arm
- 8: Lageerfassungseinrichtung
- 9: erste Referenzmarkierung
- 10: zweite Referenzmarkierung
- 11: unteres Ende
- 12: oberes Ende
- 13: Schiene
- 14: Presse
- 20: erster Verfahrensschritt
- 30: zweiter Verfahrensschritt
- 40: dritter Verfahrensschritt
- 50: vierter Verfahrensschritt
- 60: fünfter Verfahrensschritt
- 70: sechster Verfahrensschritt

## Patentansprüche

1. System (1) zum lagegenauen Platzieren eines zu bearbeitenden Objekts (2) an einer Fertigungsvorrichtung (3), aufweisend mindestens ein Lagebestimmungssystem (4) zur Bestimmung einer relativen Lage eines zu bearbeitenden Objekts (2) zu einer Fertigungsvorrichtung (3) und eine Positioniervorrichtung (5) zum Positionieren des zu bearbeitenden Objekts (2) an der Fertigungsvorrichtung (3), wobei die Positioniervorrichtung (5) eine Aufnahmevorrichtung (6) zur Aufnahme sowie Abgabe des zu bearbeitenden Objekts (2) und einen bewegbaren Arm (7) zum Bewegen des zu bearbeitenden Objekts (2) aus einer ersten Lage in eine zweite Lage aufweist, wobei das Lagebestimmungssystem (4) mindestens eine Lageerfassungseinrichtung (8) aufweist, die zur Erfassung einer relativen Lage der Aufnahmevorrichtung (6) zur Lageerfassungseinrichtung (8) ausgebildet ist, wobei die Lageerfassungseinrichtung (8) ausgebildet ist, eine relative Lage des zu bearbeitenden Objekts (2) zur Lageerfassungseinrichtung (8) zu erfassen,
**dadurch gekennzeichnet, dass** die Lageerfassungseinrichtung (8) weiter ausgebildet ist, eine relative Lage der Fertigungsvorrichtung (3) zur Lageerfassungseinrichtung (8) zu erfassen.

2. System (1) nach Anspruch 1,
**dadurch gekennzeichnet, dass** das Lagebestimmungssystem (4) mindestens eine erste Referenzmarkierung (9) und mindestens eine zweite Referenzmarkierung (10) aufweist, wobei die erste Referenzmarkierung (9) an der Aufnahmevorrichtung (6) anordenbar und die zweite Referenzmarkierung (10) an der Fertigungsvorrichtung (3) anordenbar sind, wobei das Lagebestimmungssystem (4) ausgebildet ist, eine relative Lage der ersten Referenzmarkierung (9) und der zweiten Referenzmarkierung (10) zur Lageerfassungseinrichtung (8) zu bestimmen.

3. System (1) nach Anspruch 2,
**dadurch gekennzeichnet, dass** das Lagebestimmungssystem (4) weiter ausgebildet ist, eine relative Lage des zu bearbeitenden Objekts (2) zur ersten Referenzmarkierung (9) zu bestimmen.

4. System (1) nach wenigstens einem der vorangegangenen Ansprüche, **dadurch gekennzeichnet, dass** die Lageerfassungseinrichtung (8) eine optische Lageerfassungsvorrichtung aufweist.

5. System (1) nach einem der Ansprüche 2 bis 4,
**dadurch gekennzeichnet, dass** die erste Referenzmarkierung (9) und/oder die zweite Referenzmarkierung (10) mindestens einen kugelförmigen Referenzkörper aufweist.

6. System (1) nach wenigstens einem der vorangegangenen Ansprüche, **dadurch gekennzeichnet, dass** die Positioniervorrichtung (5) als Roboter ausgebildet ist.

7. System (1) nach einem der vorangehenden Ansprüche,
**dadurch gekennzeichnet, dass** die Fertigungsvorrichtung (3) mindestens eine Tasche und/oder Erhebung zur Aufnahme eines Teilbereichs des zu bearbeitenden Objekts (2) aufweist.

8. System (1) nach wenigstens einem der vorangegangenen Ansprüche, **dadurch gekennzeichnet, dass** die Fertigungsvorrichtung (3) als Presswerkzeug ausgebildet ist.

9. Verfahren zum lagegenauen Platzieren von zu bearbeitenden Objekten (2) an einer Fertigungsvorrichtung (3), aufweisend die Schritte:
- Anordnen eines zu bearbeitenden Objekts (2) an einer Aufnahmevorrichtung (6) einer Positioniervorrichtung (5);
- Ermitteln einer relativen Lage des zu bearbeitenden Objekts (2) zu der Aufnahmevorrichtung (6);
- Ermitteln einer relativen Lage der Aufnahmevorrichtung (6) zu einer Lageerfassungseinrichtung (8) mittels der Lageerfassungseinrichtung (8);
- Ermitteln einer relativen Lage einer Fertigungsvorrichtung (3) zur Lageerfassungseinrichtung (8) mittels der Lageerfassungseinrichtung (8);
- Bestimmen einer relativen Lage des zu bearbeitenden Objekts (2) zur Fertigungsvorrichtung (3); und
- lagegenaues Ablegen des zu bearbeitenden Objekts (2) an der Fertigungsvorrichtung (3) mittels der Positioniervorrichtung (5).

10. Verfahren nach Anspruch 9,
**dadurch gekennzeichnet, dass** das Ermitteln der relativen Lage des zu bearbeitenden Objekts (2) zu der Aufnahmevorrichtung (6) durch die Lageerfassungseinrichtung (8) erfolgt.

## Claims

1. A system (1) for placing an object (2) to be processed in an accurate position on a manufacturing device (3), having at least a position determination system (4) for determining a relative position of an object (2) to be processed relative to a manufacturing device (3), and a positioning device (5) for positioning the object (2) to be processed on the manufacturing device (3), wherein the positioning device (5) has a receiving device (6) for receiving and delivering the object (2) to be processed and a movable arm (7) for moving the object (2) to be processed out of a first position into a second position, wherein the position determination system (4) has at least one position detection means (8) which is designed for detecting a relative position of the receiving device (6) relative to the position detection means (8), wherein the position detection means (8) is designed to detect a relative position of the object (2) to be processed relative to the position detection means (8),
**characterised in that** the position detection means (8) is further designed to detect a relative position of the manufacturing device (3) relative to the position detection means (8).

2. A system (1) according to Claim 1,
**characterised in that** the position determination system (4) has at least a first reference marking (9) and at least a second reference marking (10), the first reference marking (9) being able to be arranged on the receiving device (6) and the second reference marking (10) being able to be arranged on the manufacturing device (3), the position determination system (4) being designed to determine a relative position of the first reference marking (9) and of the second reference marking (10) relative to the position detection means (8).

3. A system (1) according to Claim 2,
**characterised in that** the position determination system (4) is further designed to determine a relative position of the object (2) to be processed relative to the first reference marking (9).

4. A system (1) according to at least one of the preceding claims,
**characterised in that** the position detection means (8) has an optical position detection device.

5. A system (1) according to one of Claims 2 to 4,
**characterised in that** the first reference marking (9) and/or the second reference marking (10) has/have at least one spherical reference body.

6. A system (1) according to at least one of the preceding claims,
**characterised in that** the positioning device (5) is designed as a robot.

7. A system (1) according to one of the preceding claims,
**characterised in that** the manufacturing device (3) has at least one pocket and/or elevation for receiving a partial region of the object (2) to be processed.

8. A system (1) according to at least one of the preceding claims,
**characterised in that** the manufacturing device (3) is designed as a compression mould.

9. A method for placing objects (2) to be processed in an accurate position on a manufacturing device (3), having the steps:
- arranging an object (2) to be processed on a receiving device (6) of a positioning device (5);
- ascertaining a relative position of the object (2) to be processed relative to the receiving device (6);
- ascertaining a relative position of the receiving device (6) relative to a position detection means (8) by means of the position detection means (8);
- ascertaining a relative position of a manufacturing device (3) relative to the position detection means (8) by means of the position detection means (8);
- determining a relative position of the object (2) to be processed relative to the manufacturing device (3); and
- laying the object (2) to be processed in an accurate position on the manufacturing device (3) by means of the positioning device (5).

10. A method according to Claim 9,
**characterised in that** the ascertaining of the relative position of the object (2) to be processed relative to the receiving device (6) takes place by the position detection means (8).

## Revendications

1. Système (1) de positionnement précis d'un objet (2) à usiner sur un dispositif de fabrication (3) comportant au moins un système de détermination de position (4) permettant de déterminer la position relative d'un objet (2) à usiner par rapport à un dispositif de fabrication (3) et un dispositif de positionnement (5) permettant de positionner l'objet (2) à usiner sur le dispositif de fabrication (3), le dispositif de positionnement (5) comportant un dispositif de réception (6) permettant de recevoir et de distribuer l'objet (2) à usiner ainsi qu'un bras mobile (7) permettant de déplacer l'objet (2) à usiner d'une première position à une seconde position, le système de détermination de position (4) comportant au moins un dispositif de détection de position (8) qui est réalisé pour permettre de détecter la position relative du dispositif de réception (6) par rapport à ce dispositif de détection de position (8), le dispositif de détection de position (8) étant réalisé pour permettre de détecter la position relative de l'objet (2) à usiner par rapport à ce dispositif de détection de position (8),
**caractérisé en ce que**
le dispositif de détection de position (8) est en outre réalisé pour permettre de détecter la position relative du dispositif de fabrication (3) par rapport à ce dispositif de détection de position (8).

2. Système (1) conforme à la revendication 1,
**caractérisé en ce que**
le système de détermination de position (4) comporte au moins un premier marquage de référence (9) et au moins un second marquage de référence (10), le premier marquage de référence (9) pouvant être installé sur le dispositif de fabrication (6) et le second marquage de référence (10) pouvant être installé sur le dispositif de fabrication (3), le système de détermination de position (4) étant réalisé pour permettre de déterminer la position relative du premier marquage de référence (9) et du second marquage de référence (10) par rapport au dispositif de détection de position (8).

3. Système (1) conforme à la revendication 2,
**caractérisé en ce que**
le système de détermination de position (4) est en outre réalisé pour permettre de déterminer la position relative de l'objet (2) à usiner par rapport au premier marquage de référence (9).

4. Système (1) conforme à au moins l'une des revendications précédentes,
**caractérisé en ce que**
le dispositif de détection de position (8) comporte un dispositif de détection de position optique.

5. Système (1) conforme à l'une des revendications 2 à 4,
**caractérisé en ce que**
le premier marquage de référence (9) et/ou le second marquage de référence (10) comporte(nt) au moins un corps de référence sphérique.

6. Système (1) conforme à l'une des revendications précédentes,
**caractérisé en ce que**
le dispositif de positionnement (5) est réalisé sous la forme d'un robot.

7. Système (1) conforme l'une des revendications précédentes,
**caractérisé en ce que**
le dispositif de fabrication (3) comporte au moins une poche et/ou un bossage de réception d'une zone partielle de l'objet (2) à usiner.

8. Système (1) conforme à au moins l'une des revendications précédentes,
**caractérisé en ce que**
le dispositif de fabrication (3) est réalisé sous la forme d'un outil de compression.

9. Procédé de positionnement précis d'objet (2) à usiner sur un dispositif de fabrication (3) comprenant des étapes consistant à :
- mettre en place un objet (2) à usiner sur un dispositif de réception (6) d'un dispositif de positionnement (5),
- évaluer la position relative de l'objet (2) à usiner par rapport au dispositif de réception (6),
- évaluer la position relative du dispositif de réception (6) par rapport à un dispositif de détection de position (8) au moyen du dispositif de détection de position (8),
- évaluer la position relative d'un dispositif de fabrication (3) par rapport au dispositif de détection de position (8) au moyen du dispositif de détection de position (8),
- déterminer la position relative de l'objet (2) à usiner par rapport au dispositif de fabrication (3), et
- distribuer dans une position précise l'objet (2) à usiner sur le dispositif de fabrication (3) au moyen du dispositif de positionnement (5).

10. Procédé conforme à la revendication 9,
**caractérisé en ce que**
l'évaluation de la position relève de l'objet (2) à usiner par rapport au dispositif de réception (6) est effectué par le dispositif de détection de position (8).
